(19) Europäisches Patentamt
European Patent Office
Office européen des brevets

(11) Numéro de publication: **0 330 255 B1**

(12) **FASCICULE DE BREVET EUROPEEN**

(45) Date de publication de fascicule du brevet: **05.05.93**

(51) Int. Cl.$^5$: **C08F 4/646**, C08F 10/00

(21) Numéro de dépôt: **89200315.3**

(22) Date de dépôt: **10.02.89**

(54) **Solide catalytique utilisable pour la polymérisation des alpha-oléfines, procédé pour sa préparation et procédé de polymérisation des alpha-oléfines en présence d'un système catalytique comprenant ce solide.**

(30) Priorité: **22.02.88 FR 8802200**

(43) Date de publication de la demande:
**30.08.89 Bulletin 89/35**

(45) Mention de la délivrance du brevet:
**05.05.93 Bulletin 93/18**

(84) Etats contractants désignés:
**AT BE DE ES FR GB IT NL SE**

(56) Documents cités:
**DE-A- 2 925 949**
**DE-A- 3 215 893**
**EO-A- 200 934**

(73) Titulaire: **SOLVAY**
**Rue du Prince Albert, 33**
**B-1050 Bruxelles(BE)**

(72) Inventeur: **Demiddeleer, Léopold**
**Steenput, 5**
**B-1960 Sterrebeek(BE)**
Inventeur: **Kempeneer, Yvan**
**Berkenstraat, 20**
**B-3071 Erps-Kwerps(BE)**
Inventeur: **Desvachez, Laurence**
**Avenue des Croix de Guerre, 311**
**B-1120 Bruxelles(BE)**

(74) Mandataire: **Husemann, Claude et al**
**SOLVAY Département de la Propriété Industrielle 310, Rue de Ransbeek**
**B-1120 Bruxelles (BE)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.6/3.3.1)

## Description

La présente invention concerne un solide catalytique utilisable pour la polymérisation des alpha-oléfines. Elle concerne également un procédé pour la préparation de ce solide et un procédé pour polymériser les alpha-oléfines en présence d'un système catalytique comprenant ce solide.

Il est connu d'utiliser, pour la polymérisation à basse pression des oléfines, des systèmes catalytiques comprenant un composé de métal de transition et un composé organométallique.

On connaît aussi, par les brevets BE-A-791676 et 799977 (SOLVAY & Cie), des systèmes catalytiques superactifs dont un constituant est obtenu notamment en faisant réagir entre eux un composé oxygéné organique ou un dihalogénure de magnésium et un composé oxygéné organique du titane, tel que le tétrabutylate, de manière à obtenir une solution à laquelle est ajouté ensuite un halogénure d'hydrocarbylaluminium, tel qu'un dichlorure d'alkyl-aluminium, dans des conditions telles que l'on obtienne un complexe solide.

Quoique l'activité et la productivité de ces systèmes catalytiques soient très élevées, ils présentent l'inconvénient de ne pas toujours permettre un contrôle aisé de la morphologie du polymère, lorsqu'on effectue la polymérisation en suspension dans un diluant hydrocarboné.

On connaît encore, par le brevet US-A-4399055 (MITSUBISHI PETROCHEMICAL), des constituants catalytiques solides obtenus à partir de supports à base d'halogénure de magnésium de texture particulière.

Ces supports de faible surface spécifique sont préparés par réaction d'halogénures de magnésium, d'esters d'acide(s) (poly)titanique(s) et de polysiloxanes. Les constituants catalytiques solides sont préparés par mise en contact de ces supports avec au moins un composé choisi parmi les composés halogénés liquides du titane, les composés halogénés du silicium et les polysiloxanes. Les constituants catalytiques ainsi préparés sont utilisables, conjointement avec un cocatalyseur organométallique conventionnel, pour polymériser les alpha-oléfines en polymères de bonne morphologie.

L'utilisation des systèmes catalytiques ainsi constitués présente toutefois des inconvénients : leur activité, c'est-à-dire le poids de polyoléfine qu'ils permettent d'obtenir par unité de poids de titane présent dans le constituant catalytique solide, est insuffisante; par ailleurs, cette activité ne se manifeste que lorsque le constituant catalytique solide est présent depuis un certain temps - appelé "période d'induction" - dans le milieu de polymérisation. Cette période d'induction, pendant laquelle le système catalytique ne génère tout au plus que des oligomères à bas poids moléculaire, produits par ailleurs gênants, peut atteindre, selon le type de procédé de polymérisation, de 30 minutes à plusieurs heures. Cela est évidemment inacceptable à l'échelle industrielle pour des raisons économiques.

La présente invention vise dès lors à fournir des solides catalytiques superactifs, dont l'activité n'est inhibée par aucune période d'induction et qui permettent d'obtenir aisément des polyoléfines de bonne granulométrie.

La présente invention concerne à cet effet un solide catalytique, utilisable pour la polymérisation des alpha-oléfines, contenant du magnésium, un halogène, du titane et du silicium, ce solide catalytique contenant en outre de l'aluminium et une fraction d'au moins 50 % de sa porosité BET (norme britannique BS4359/1) étant développée dans des pores de rayon inférieur à $5.10^{-9}$ m (50Å).

La fraction de porosité ($f_p$) développée dans des pores de rayon inférieur à $5.10^{-9}$ m (appelée ci-après microporosité) est appréciée par l'examen du solide catalytique par la méthode d'adsorption d'azote (méthode BET; norme britannique BS4359/1), qui permet de déterminer la surface spécifique de ce solide. L'exploitation de cette méthode permet aussi de déterminer la répartition du volume poreux en fonction des rayons des pores dont le rayon est inférieur à $2.10^{-8}$ m (200 Å).

En général, la $f_p$ du solide catalytique selon l'invention est telle que plus de 60 % de sa surface spécifique sont développés dans des pores de rayons inférieurs à $5.10^{-9}$ m. De préférence, la $f_p$ de ce solide est telle que plus de 75 % de sa surface spécifique sont développés dans des pores de rayons inférieurs à $3.10^{-9}$ m (30 Å). Dans les cas les plus favorables, la $f_p$ de ce solide est telle qu'au moins 85 % de sa surface spécifique sont développés dans des pores de rayons inférieurs à $3.10^{-9}$ m.

Dans cette zone de rayons de pores inférieurs à $2.10^{-8}$ m des solides catalytiques selon l'invention, on observe également qu'au moins 50 % du volume poreux sont confinés dans des pores de rayons inférieurs à $3.10^{-9}$ m. De préférence, au moins 60 % du volume poreux correspondant à cette zone de rayons de pores sont confinés dans des pores de rayons inférieurs à $3.10^{-9}$ m.

Dans les cas les plus favorables, jusqu'à 60 % du volume poreux correspondant à cette zone de rayons de pores sont confinés dans des pores de rayons inférieurs à $2.10^{-9}$ m.

En conséquence de leur microporosité extrêmement élevée, les solides catalytiques selon l'invention présentent une surface spécifique également élevée; en général, cette surface spécifique est supérieure à

100 $m^2/g$, de préférence supérieure à 150 $m^2/g$. La surface spécifique des solides catalytiques les plus microporeux peut atteindre et dépasser 250 $m^2/g$. Le volume poreux de ces solides, quant à lui, pour les pores de rayons inférieurs à $2.10^{-8}$ m, est supérieur à 0,10 ml/g, de préférence supérieur à 0,15 ml/g. Dans les meilleurs cas, il peut dépasser 0,20 ml/g et même atteindre 0,40 ml/g. Le volume poreux total de ces solides, apprécié par les méthodes conjuguées d'adsorption d'azote et de pénétration de mercure, est supérieur à 0,5 ml/g, de préférence supérieur à 0,8 ml/g. Dans les meilleurs cas, il peut atteindre environ 1,2 ml/g.

Les solides catalytiques microporeux selon l'invention sont préparés au départ d'un halogénure de magnésium (M) qui fournit le magnésium et au moins une partie de l'halogène entrant dans leur composition.

Par halogénure de magnésium (M), on entend désigner n'importe quel composé comprenant au moins une liaison magnésium – halogène. L'halogène lié au magnésium peut être le fluor, le chlore, le brome ou l'iode. De préférence, l'halogène est le chlore.

Parmi les halogénures (M) utilisables pour préparer les solides catalytiques selon l'invention, on peut citer :

- les dihalogénures du type commercial qui sont appelés conventionnellement "anhydres" et qui sont en fait des dihalogénures hydratés contenant une molécule et moins d'eau par molécule de dihalogénure; les dichlorures de magnésium "anhydres du commerce" sont un exemple typique de ces composés;
- les dihalogénures complexés au moyen de divers donneurs d'électrons, comme par exemple les complexes avec l'ammoniac, tels que $MgCl_2.6NH_3$, $MgCl_2.2NH_3$, et les complexes avec les alcools, tels que $MgCl_2.6CH_3OH$, $MgCl_2.6C_2H_5OH$ et $MgCl_2.6C_3H_7OH$;
- les dihalogénures hydratés contenant plus d'une molécule d'eau par molécule de dihalogénure, tels que $MgCl_2.4H_2O$ et $MgCl_2.2H_2O$;
- les composés comprenant, outre la liaison magnésium – halogène, un radical inorganique, lié au magnésium par l'intermédiaire de l'oxygène, tel qu'un radical hydroxyle, comme dans Mg(OH)Cl et Mg(OH)Br;
- les composés comprenant, outre la liaison magnésium – halogène (de préférence la liaison magnésium – chlore) une liaison magnésium – radical organique, de préférence une liaison magnésium – radical hydrocarboné (tel que défini plus haut), comme dans $Mg(C_2H_5)Cl$ et $Mg(C_6H_5)Cl$;
- les produits de l'hydrolyse des halogénures (de préférence des chlorures) hydratés de magnésium, pour autant que ces produits contiennent encore des liaisons magnésium – halogène;
- les compositions mixtes comprenant des composés halogénés et oxygénés du magnésium. Des exemples typiques de ces compositions sont les halogénures (de préférence les chlorures) basiques de magnésium tels que $MgCl_2.MgO.H_2O$, $MgCl_2.3MgO.7H_2O$ et $MgBr_2.3MgO.6H_2O$;
- les mélanges de deux ou plusieurs des composés halogénés du magnésium définis ci – dessus.

Enfin, il est bien entendu que l'utilisation de deux ou plusieurs composés (M) tels que définis ci – dessus entre également dans le cadre de la présente invention.

De tous les halogénures du magnésium (M) cités ci – dessus, ceux qui ont la préférence sont les dihalogénures, et parmi ces derniers, les dichlorures de magnésium "anhydres du commerce" sont tout particulièrement préférés.

L'halogénure de magnésium (M) utilisable pour préparer les solides catalytiques selon l'invention est mis en contact avec une série de réactifs dont chacun contient au moins un élément choisi parmi le titane, le silicium et l'aluminium, dans des conditions telles qu'elles conduisent finalement à un solide catalytique présentant la microporosité définie plus haut.

A cet effet,

- on transforme l'halogénure de magnésium (M) en un complexe solide (C) contenant du magnésium, un halogène, du titane et du silicium par addition d'un agent de précipitation du complexe (C) choisi parmi les composés polymériques (S) du silicium, à un milieu liquide contenant une solution homogène résultant du contact d'un composé oxygéné organique (T) du titane, optionnellement additionné d'un composé électrodonneur (ED), avec l'halogénure (M);
- on transforme le complexe solide (C), par mise en contact dudit complexe solide avec un composé (H) choisi parmi les composés halogénés du titane et du silicium, en un solide catalytique dont une fraction d'au moins 50 % de la porosité BET est développée dans des pores de rayon inférieur à $5.10^{-9}$ m, par mise en contact dudit complexe solide avec un composé organoaluminique supplé – mentaire (A).

Les conditions générales de ces transformations sont détaillées ci – après.

1. Nature du composé oxygéné organique (T)

Le composé oxygéné organique (T) du titane utilisable pour la première transformation de l'halogénure de magnésium (M) en complexe solide (C) peut être choisi parmi tous les composés où un radical organique quelconque est lié au titane par l'intermédiaire de l'oxygène, c'est-à-dire tous les composés comprenant au moins une séquence de liaisons titane-oxygène-radical organique par atome de titane. Pour des raisons de commodité de préparation, on utilise de préférence les composés (T) du titane tétravalent parce qu' ils sont plus souvent liquides et plus souvent et mieux solubles que ceux où le titane est à une valence inférieure.

Les composés (T) du titane utilisables peuvent également être des composés comprenant des liaisons titane-oxygène et les composés condensés comprenant des séquences de liaisons titane-oxygène-titanepour autant qu'ils comportent aussi au moins une séquence de liaisons titane-oxygène-radical organique par molécule.

Le radical organique peut être saturé ou insaturé, à chaîne ramifiée, à chaîne droite ou cyclique; il peut également être substitué ou comporter des hétéroatomes, tels que le silicium, le soufre, l'azote ou le phosphore, dans sa chaîne. Il est choisi de préférence parmi les radicaux hydrocarbonés et en particulier parmi les radicaux alkyle, alkényle, cycloalkyle, aryle, arylalkyle et alkylaryle.

On préfère utiliser les composés oxygénés organiques dont le radical organique est un radical n-alkyle en $C_{2-8}$.

L'utilisation de composés (T) du titane comprenant plusieurs radicaux organiques différents entre également dans le cadre de l'invention.

Parmi les composés oxygénés organiques (T) du titane, on peut citer :

- les alkoxydes, tels que $Ti(OC_2H_5)_4$, $Ti(OnC_3H_7)_4$, $Ti(OnC_4H_9)_4$, $Ti(OnC_5H_{11})_4$, $Ti(OnC_6H_{13})_4$, $Ti-(OnC_7H_{15})_4$ et $Ti(OnC_8H_{17})_4$,
- les phénoxydes, tels que $Ti(OC_6H_5)_4$,
- les oxyalkoxydes, tels que $TiO(OC_2H_5)_2$,
- les alkoxydes condensés, tels que $Ti_2O(OiC_3H_7)_6$,
- les carboxylates, tels que $Ti(OOCCH_3)_4$,
- les énolates, tels que l'acétylacétonate de titane,

ainsi que les esters d'acides polytitaniques que l'on peut représenter par la formule :

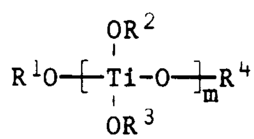

(I)

dans laquelle $R^1$ à $R^4$ représentent des radicaux organiques, identiques ou différents, tels que définis plus haut, et m est un nombre de préférence tel que l'ester peut être utilisé sous forme liquide ou dissoute. De préférence, $R^1$ à $R^4$ sont des radicaux alkyle identiques à chaîne linéaire contenant de 2 à 8 atomes de carbone et m est compris entre 2 et 15, en particulier entre 2 et 10.

Des exemples d'esters d'acides polytitaniques correspondant à la formule (I) sont les polytitanates de n-butyle, de n-hexyle et de n-octyle (m valant 2 à 10).

Les meilleurs résultats sont obtenus lorsque les composés (T) sont choisis parmi les tétraalkoxydes du titane.

Il va de soi que l'utilisation de plusieurs composés (T) différents du titane entre également dans le cadre de l'invention.

2. Nature du composé polymérique (S)

Le composé (S) du silicium utilisable, avec le composé (T) du titane, pour la première transformation de l'halogénure de magnésium (M) en complexe solide (C) est choisi parmi les polymères dérivés des siloxanes. Plus particulièrement, la structure du composé (S) peut être représentée par la formule générale :

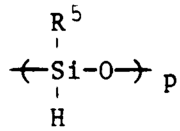 (II)

dans laquelle $R^5$ représente un radical hydrocarboné tel que défini plus haut en rapport avec le composé (T).

Des exemples de polysiloxanes ayant une structure correspondant à celle représentée par la formule (II) comprennent les méthyl-, éthyl-, phényl- et cyclohexyl hydropolysiloxanes, le 1,3,5,7-tétraméthyltétrahydrocyclotétrasiloxane et le 1,3,5,7,9-pentaméthylpentahydrocyclopentasiloxane.

Le degré de polymérisation (p) de ces polysiloxanes n'est pas particulièrement critique. Il peut valoir par exemple jusqu'à environ 40. Pour des raisons de commodité de manipulation, toutefois, on préfère utiliser des polymères dont la viscosité est comprise entre environ 1 et 100 centistokes. Quoique la structure des extrémités de chaîne de ces polymères ne soit pas critique non plus, on préfère que ces extrémités soient rendues inertes par la présence de groupements tels que des groupes trialkylsilyle.

Un composé (S) particulièrement préféré est le méthylhydrogénopolysiloxane, pour des raisons d'accessibilité.

3. Nature du composé électrodonneur (ED)

Optionnellement, un composé électrodonneur (ED) peut aussi être utilisé, conjointement avec les composés (T) et (S), pour la première transformation de l'halogénure de magnésium (M) en complexe solide (C).

Des exemples de pareils composés (ED) utilisables à titre optionnel comprennent les acides carboxyliques et les anhydrides, halogénures et esters de ces acides, les alcools, les éthers, les cétones, les amines, les amides, les nitriles, les aldéhydes, les alcoolates, les phosphines, les phosphamides, les thioéthers et les thioesters. Parmi ces composés, les acides carboxyliques, leurs anhydrides, halogénures et esters, les alcools et les éthers sont préférés, tout spécialement les alcools et les éthers aliphatiques contenant de 2 à 6 atomes de carbone et en particulier le butanol et le dibutyléther.

4. Conditions C1 de préparation du complexe solide (C)

On réalise la réaction de formation du complexe (C) en milieu liquide. Pour ce faire, on peut opérer soit en présence d'un diluant inerte, dans lequel un au moins des réactifs est de préférence soluble, soit en l'absence de diluant dans des conditions de température et de pression telles qu'au moins un des réactifs soit à l'état liquide. Comme mentionné plus haut, le composé (T) répond souvent à au moins l'une de ces conditions. Lorsqu'il est fait usage d'un diluant inerte, tous les solvants habituellement employés en chimie organique peuvent être utilisés. Des exemples de diluants inertes sont les hydrocarbures liquides, éventuellement halogénés, et les huiles de silicones. On préfère toutefois utiliser les hydrocarbures aliphatiques non halogénés et cycloaliphatiques et, parmi ces derniers, surtout les alkanes et les cycloalkanes dont la molécule contient de 4 à 20 atomes de carbone tels que l'isobutane, le pentane normal, l'hexane normal, le cyclohexane, le méthylcyclohexane et les dodécanes.

Le composé (T), pur ou dissous dans un diluant inerte et optionnellement additionné du composé (ED), agit comme solvant de l'halogénure de magnésium (M) et le composé (S), ajouté ensuite à la solution homogène ainsi formée agit comme agent de précipitation du complexe solide (C).

Les divers composés contribuant à la formation du complexe (C) peuvent être mis en oeuvre à des températures comprises entre -100 et 200 °C, de préférence entre 0 et 130 °C. Lorsque le composé (S) est ajouté en dernier lieu, on préfère que cette addition se fasse à une température inférieure à 70 °C. Le temps de contact total est généralement compris entre environ 10 minutes et environ 20 heures, de préférence entre environ 1 et environ 5 heures.

Les quantités relatives des divers composés mis en contact avec l'halogénure de magnésium (M) pour préparer le complexe (C) ne sont pas critiques; ces réactifs sont généralement mis en oeuvre dans les rapports définis ci-après.

La quantité de composé (T) est définie par rapport à la quantité d'halogénure de magnésium (M) mise en oeuvre. Elle peut être comprise entre 0,1 et 10 at.-g (atome-gramme) de titane présent dans le composé (T) par at.-g de magnésium présent dans l'halogénure (M). De préférence, le rapport atomique

Ti/Mg est compris entre 0,5 et 5, les meilleurs résultats ayant été obtenus pour des valeurs de ce rapport comprises entre 1 et 3.

La quantité de composé (S) est définie par rapport à la quantité de composé (T) mise en oeuvre. Elle peut être comprise entre 0,01 et 100 at.-g de silicium présent dans le composé (S) par at.-g de titane présent dans le composé (T). De préférence, le rapport atomique Si/Ti est compris entre 0,1 et 10, les meilleurs résultats ayant été obtenus pour des valeurs de ce rapport comprises entre 0,5 et 4.

La quantité du composé (ED) optionnel, lorsqu'il est utilisé, est aussi définie par rapport à la quantité de composé (T) mise en oeuvre. Elle peut être comprise entre 0,001 et 10 moles de composé (ED) par mole de composé (T) et de préférence entre 0,01 et 5 moles par mole. Les meilleurs résultats ont été obtenus lorsque 0,1 à 2,5 moles de composé (ED) sont utilisés par mole de composé (T) mis en oeuvre.

A la fin de sa préparation, le complexe solide (C) est de préférence séparé du mélange réactionnel dans lequel il a été formé et, de préférence également, lavé au moyen d'un diluant inerte répondant aux définitions et limitations mentionnées ci-avant en rapport avec le diluant inerte utilisable au cours de la préparation.

A l'issue de sa préparation, le complexe solide (C) qui contient du magnésium, un halogène, du titane et du silicium, se présente en général, après séparation et lavage, sous la forme de particules sphéroïdales de granulométrie régulière et resserrée autour de la valeur moyenne, de faible surface spécifique (de l'ordre de 0,5 à 5 $m^2/g$) et non microporeuses au sens où on l'entend selon l'invention.

La transformation de ce complexe solide (C) en solide catalytique microporeux est ensuite généralement poursuivie selon des conditions générales (conditions de contact C2) et en présence de composés (H) et (A) décrits ci-après.

5. Nature du composé (H)

Le composé (H) utilisable pour la transformation du complexe solide (C) est choisi parmi les composés halogénés du titane, les composés halogénés du silicium et les mélanges de ces composés.

Parmi les composés halogénés du titane utilisables, on peut citer :

- les tétrahalogénures, tels que $TiCl_4$, $TiBr_4$;
- les halogénures complexés au moyen de divers donneurs d'électrons, tels que $TiCl_4.6NH_3$, $TiCl_4.2C_5H_5N$, $TiCl_4.C_4H_8O_2$;
- les halogénures complexes de titane et d'un métal alcalin, tels que $K_2TiCl_6$ et $Na_2TiCl_6$;
- les oxyhalogénures, tels que $TiOCl_2$;
- les halogénoalkoxydes, tels que $Ti(OC_2H_5)_2Cl_2$, $Ti(OC_2H_5)_3Cl$, $Ti(OiC_3H_7)_3Cl$, $Ti(OiC_4H_9)_2Cl_2$, $Ti-(OC_2H_5)Br_3$.

Parmi les composés halogénés du silicium utilisables, on peut citer :

- les tétrahalogénures, tels que $SiCl_4$, $SiBr_4$;
- les halogénosilanes, tels que $HSiCl_3$, $H_2SiCl_2$, $H_3SiCl$;
- les alkyl- et phénylhalogénosilanes, tels que $H(C_2H_5)SiCl_2$, $H(t-C_4H_9)SiCl_2$, $H(C_6H_5)SiCl_2$, $CH_3SiCl_3$, $(CH_3)_2SiCl_2$, $(C_2H_5)_2SiCl_2$, $(CH_3)_3SiCl$;
- les alkoxy- et phénoxyhalogénosilanes, tels que $Si(OCH_3)Cl_3$, $Si(OC_2H_5)Cl_3$, $Si(OC_2H_5)_2Cl_2$, $Si-(OC_6H_5)Cl_3$.

Parmi les composés énumérés ci-dessus, on préfère utiliser les tétrahalogénures de titane et de silicium, et tout particulièrement le tétrachlorure de titane.

6. Nature du composé organoaluminique (A)

Le composé (A) utilisable, avec le composé (H), pour transformer le complexe solide (C) peut être n'importe quel composé organoaluminique susceptible de créer la microporosité définie plus haut dans les particules de complexe solide (C).

Le composé (A) est en général un composé organoaluminique dont la structure peut être représentée par la formule générale :

$$AlR^6_n X_{3-n} \qquad (III)$$

dans laquelle $R^6$ représente un radical hydrocarboné tel que défini plus haut en rapport avec le composé (T), X représente un halogène (fluor, chlore, brome ou iode) et n est un nombre tel que $0 < n \leqq 3$.

De préférence, $R^6$ est choisi parmi les radicaux alkyle, alkényle, cycloalkyle, aryle, arylalkyle et alkylaryle, X est le chlore et n est tel que $1 \leqq n \leqq 3$.

Les meilleurs résultats ont été obtenus avec les composés organoaluminiques représentés par la formule (III) dans laquelle $R^6$ est un radical alkyle en $C_{2-6}$, n valant 1 à 3.

On a observé que les composés organoaluminiques (A) exempts d'halogène (n = 3) fournissent des solides catalytiques permettant d'obtenir des polyoléfines de distribution relativement étroite des poids moléculaires, alors que les composés organoaluminiques (A) contenant de l'halogène dans leur molécule fournissent des solides catalytiques permettant d'obtenir des polyoléfines de distribution relativement large des poids moléculaires.

Des exemples de composés organoaluminiques (A) utilisables comprennent : $Al(CH_3)_3$, $Al(C_2H_5)_3$, $Al-(iC_4H_9)_3$, $Al(C_6H_{11})_3$, $Al(C_2H_5)_2Cl$, $Al(C_2H_5)_2Br$, $Al(iC_4H_9)_2Cl$, $Al(C_2H_5)_{1,5}Cl_{1,5}$,$Al(C_2H_5)Cl_2$, $Al(iC_4H_9)Cl_2$.

Des composés organoaluminiques tout particulièrement préférés sont le triéthylaluminium et le dichlorure d'isobutylaluminium.

Il va de soi que l'utilisation de plusieurs composés organoaluminiques (A) différents entre également dans le cadre de l'invention.

7. Conditions C2 de préparation du solide catalytique microporeux

La transformation du complexe solide (C) peut se faire par mise en contact de ce dernier avec les composés (H) et (A) dans des conditions qui sont quelconques et non critiques pour autant qu'elles conduisent à un solide catalytique microporeux contenant du magnésium, un halogène, du titane, du silicium et de l'aluminium.

Pour réaliser cette transformation, les composés (H) et (A) peuvent être mis en oeuvre ensemble ou, de préférence, successivement, sous les formes mentionnées dans les conditions C1, en rapport avec les composés (T), (S) et optionnel (ED).

On préfère réaliser la transformation du complexe (C) en milieu liquide. Pour ce faire, on peut opérer soit en présence d'un diluant inerte, tel que ceux décrits aux conditions C1, dans lequel un au moins des réactifs est de préférence soluble, soit en l'absence de diluant dans des conditions de température et de pression telles qu'au moins un des réactifs soit à l'état liquide. Les composés (H) et (A) répondent souvent à au moins l'une de ces conditions.

Le plus fréquemment, le complexe (C), mis en suspension dans un diluant inerte est additionné d'abord du composé (H) et le produit intermédiaire obtenu de faible surface spécifique (de l'ordre de 10 $m^2/g$), éventuellement séparé de son milieu de préparation et éventuellement lavé au moyen d'un diluant inerte, est mis ensuite en contact, de préférence à nouveau sous forme d'une suspension dans un diluant inerte, avec le composé (A).

Les composés (H) et (A) peuvent être mis en oeuvre à des températures et pendant des temps de contact semblables à ceux définis aux conditions C1.

Les quantités relatives de composés (H) et (A) mis en contact avec le complexe (C) ne sont pas critiques pour autant que le solide catalytique obtenu en fin de préparation soit microporeux.

Les composés (H) et (A) sont généralement mis en oeuvre dans les rapports définis ci-après.

La quantité de composé (H) est définie par rapport à la quantité de titane présente dans le complexe (C). Elle peut être comprise entre 0,01 et 10 at.-g de titane ou de silicium présent dans le composé (H) par at.-g de titane présent dans le complexe (C). De préférence, le rapport atomique (Ti ou Si)/Ti est compris entre 0,1 et 5, les meilleurs résultats étant obtenus pour des valeurs de ce rapport comprises entre 0,5 et 2.

La quantité de composé (A) est définie par rapport à la quantité totale de titane présent dans le solide lorsqu'il est mis en contact avec ce composé (si la mise en contact du complexe solide (C) avec le composé (H) et avec le composé (A) sont simultanées, cette quantité totale de titane présent est déterminée sur le solide obtenu en parallèle, toutes autres conditions étant égales, par mise en contact du complexe solide (C) avec le seul composé (H)). La quantité de composé (A) peut être comprise entre 0,1 et 100 at.-g d'aluminium par at.-g de titane présent dans ledit solide. De préférence, le rapport atomique Al/Ti est compris entre 1 et 20, les meilleurs résultats étant obtenus pour des valeurs de ce rapport comprises entre 2 et 10.

Le solide catalytique ainsi préparé contient, comme il a été dit plus haut, du magnésium, un halogène, du titane, partiellement sous forme trivalente, du silicium, ainsi que des radicaux organiques (notamment des groupes hydrocarbyloxy, en particulier des groupes alkoxy provenant du composé T) et de l'aluminium en quantités variables en fonction de la nature et des quantités respectives des divers réactifs à l'intervention desquels il a été formé. Dans le cas de la préparation du solide catalytique à l'intervention de composés (A) exempts d'halogène, le titane peut être substantiellement (au moins 50 %) sous forme trivalente; dans le cas de la préparation dudit solide à l'intervention de composés (A) contenant de

l'halogène, le titane peut être substantiellement (au moins 60 %) sous forme tétravalente.

Les solides catalytiques selon l'invention sont insolubles dans les alkanes et les cycloalkanes utilisables comme diluants. Ils peuvent être utilisés en polymérisation tels qu'ils sont obtenus, sans être séparés du milieu réactionnel de préparation. On préfère toutefois les séparer de ce milieu réactionnel, notamment lorsqu'ils sont préparés en présence d'un solvant polaire, selon n'importe quel moyen connu. Lorsque le milieu réactionnel est liquide, on peut utiliser par exemple la filtration, la décantation ou la centrifugation.

Après séparation, les solides catalytiques peuvent être lavés de manière à éliminer les réactifs en excès dont ils pourraient être encore imprégnés. Pour ce lavage, on peut utiliser n'importe quel diluant inerte et par exemple ceux qui sont utilisables comme constituants du milieu réactionnel tels que les alkanes et les cycloalkanes. Après lavage, les solides catalytiques peuvent être séchés, par exemple par balayage au moyen d'un courant d'azote sec ou sous vide.

Les systèmes catalytiques utilisables selon l'invention comprennent également un composé organométallique qui sert d'activateur. On utilise les composés organométalliques des métaux des groupes Ia, IIa, IIb, IIIb et IVb du Tableau Périodique (version publiée dans Kirk-Othmer Encyclopedia of Chemical Technology, second complete revised edition, volume 8, 1965, page 94) tels que les composés organométalliques du lithium, du magnésium, du zinc, de l'aluminium ou de l'étain. Les meilleurs résultats sont obtenus avec les composés organoaluminiques.

On peut utiliser des composés totalement alkylés dont les chaînes alkyles comprennent de 1 à 20 atomes de carbone et sont droites ou ramifiées tels que par exemple le n-butyllithium, le diéthylmagnésium, le diéthylzinc, le tétraéthylétain, le tétrabutylétain et les trialkylaluminiums.

On peut également utiliser les hydrures d'alkylmétaux dans lesquels les radicaux alkyles comprennent également de 1 à 20 atomes de carbone tels que l'hydrure de diisobutylaluminium et l'hydrure de triméthylétain. Conviennent également les alkylhalogénures de métaux dans lesquels les radicaux alkyles comprennent aussi de 1 à 20 atomes de carbone tels que le sesquichlorure d'éthylaluminium, le chlorure de diéthylaluminium et le chlorure de diisobutylaluminium.

On peut encore utiliser des composés organoaluminiques obtenus en faisant réagir des trialkylaluminiums ou des hydrures de dialkylaluminium dont les radicaux comprennent de 1 à 20 atomes de carbone avec des dioléfines comprenant de 4 à 20 atomes de carbone, et plus particulièrement les composés dénommés isoprénylaluminiums.

Les solides catalytiques selon l'invention s'utilisent pour la polymérisation des oléfines à insaturation terminale dont la molécule contient de 2 à 20, et de préférence de 2 à 6 atomes de carbone, telles que l'éthylène, le propylène, le butène-1, le 4-méthylpentène-1 et l'hexène-1. Il s'applique également à la copolymérisation de ces oléfines entre elles ainsi qu'avec des dioléfines comprenant de 4 à 20 atomes de carbone de préférence. Ces dioléfines peuvent être des dioléfines aliphatiques non conjuguées telles que l'hexadiène-1,4, des dioléfines monocycliques telles que le 4-vinylcyclohexène, le 1,3-divinylcyclohexane, le cyclopentadiène ou le cyclooctadiène-1,5, des dioléfines alicycliques ayant un pont endocyclique telles que le dicyclopentadiène ou le norbornadiène et les dioléfines aliphatiques conjuguées telles que le butadiène et l'isoprène.

Le procédé de polymérisation selon l'invention s'applique particulièrement bien à la fabrication d'homopolymères de l'éthylène et de copolymères contenant au moins 80 % molaires et de préférence 90 % molaires d'éthylène.

La polymérisation peut être effectuée selon n'importe quel procédé connu : en solution ou en suspension dans un solvant ou un diluant hydrocarboné ou encore en phase gazeuse. Pour les procédés en solution ou en suspension, on utilise des solvants ou diluants analogues à ceux employés pour la préparation du solide catalytique : ce sont de préférence des alkanes ou des cycloalkanes tels que l'isobutane, le pentane, l'hexane, l'heptane, le cyclohexane, le méthylcyclohexane ou leurs mélanges. On peut également opérer la polymérisation dans le monomère ou un des monomères maintenu à l'état liquide. Il est particulièrement avantageux de mettre en oeuvre des procédés de polymérisation dans lesquels les polymères sont générés directement sous forme de particules. Parmi ces procédés, on préfère les procédés de polymérisation en suspension dans un diluant hydrocarboné liquide dans les conditions de polymérisation qui, après séparation du monomère qui n'a pas réagi et du diluant, fournissent en présence des systèmes catalytiques de l'invention, des particules de polymère de poids spécifique apparent (PSA) élevé et de distribution granulométrique étroite.

La pression de polymérisation est comprise en général entre la pression atmosphérique et 100 bars, de préférence 50 bars. La température est choisie généralement entre 20 et 200 °C. Elle est de préférence comprise entre 60 et 120 °C de manière à obtenir directement le polymère sous forme solide.

La polymérisation peut être effectuée en continu ou en discontinu.

Le composé organométallique et le solide catalytique peuvent être ajoutés séparément au milieu de polymérisation. On peut également les mettre en contact, à une température comprise entre −40 et 80 °C, pendant une durée pouvant aller jusqu'à 2 heures, avant de les introduire dans le réacteur de polymérisation. On peut aussi les mettre en contact en plusieurs étapes ou encore ajouter une partie du composé organométallique avant le réacteur ou encore ajouter plusieurs composés organométalliques différents.

La quantité totale de composé organométallique mise en oeuvre peut varier dans une large mesure. Elle est comprise en général entre 0,02 et 50 mmoles par $dm^3$ de solvant, de diluant ou de volume de réacteur et de préférence entre 0,5 et 2,5 mmoles par $dm^3$.

La quantité de solide catalytique mise en oeuvre est déterminée en fonction de sa teneur en titane. Elle est choisie en général de manière que la concentration soit comprise entre 0,001 et 2,5 et de préférence entre 0,01 et 0,25 mat.-g de titane ou de zirconium par $dm^3$ de solvant, de diluant ou de volume de réacteur (mat.-g = milli-atome-gramme).

Le rapport des quantités de composé organométallique et de solide catalytique n'est pas critique non plus. On le choisit en général de manière que le rapport composé organométallique/titane exprimé en mole/at.-g soit supérieur à 1 et de préférence supérieur à 10.

Le poids moléculaire moyen, et partant l'indice de fluidité (melt index) des polymères fabriqués selon le procédé de l'invention peut être réglé par l'addition au milieu de polymérisation d'un ou de plusieurs agents de modification du poids moléculaire comme l'hydrogène, le zinc ou le cadmium diéthyle.

Le poids spécifique des homopolymères fabriqués suivant le procédé de polymérisation selon l'invention peut également être réglé par l'addition au milieu de polymérisation d'un alkoxyde d'un métal des groupes IVa et Va du Tableau Périodique. C'est ainsi qu'on peut fabriquer des polyéthylènes de poids spécifique intermédiaire entre celui des polyéthylènes à haute densité classiques et celui des polyéthylènes préparés selon un procédé à haute pression.

Parmi les alkoxydes convenant pour ce réglage, ceux du titane et du vanadium dont les radicaux contiennent de 1 à 20 atomes de carbone chacun sont particulièrement efficaces. On peut citer parmi eux $Ti(OCH_3)_4$, $Ti(OC_2H_5)_4$, $Ti(OC_4H_9)_4$, $Ti[OCH_2CH(CH_3)_2]_4$, $Ti(OC_8H_{17})_4$ et $Ti(OC_{16}H_{33})_4$.

Le procédé de polymérisation selon l'invention permet de fabriquer des polyoléfines avec des activités rapportées à la quantité de titane présente dans le solide catalytique microporeux exceptionnellement élevée. Dans l'homopolymérisation de l'éthylène, exprimée en grammes de polyéthylène par at.-g de titane mis en oeuvre, cette activité dépasse régulièrement $2.10^3$. Dans les cas les plus favorables, elle est supérieure à $5.10^3$. Elle est dans tous les cas largement supérieure au niveau des activités conférées aux systèmes catalytiques de l'art antérieur, comprenant des solides catalytiques non microporeux préparés sans l'intervention du composé (A) (brevet US-A-4399055). Cette activité n'est inhibée par aucune période d'induction.

De ce fait, la teneur en résidus catalytiques des polymères fabriqués selon ce procédé est extrêmement basse. Plus particulièrement, la teneur en métal de transition résiduel est excessivement faible. Or, ce sont les dérivés des métaux de transition qui sont surtout gênants dans les résidus catalytiques en raison des complexes colorés qu'ils forment avec les antioxydants phénoliques habituellement utilisés dans les polyoléfines et du caractère toxique desdits métaux.

Dans le procédé selon l'invention, la teneur des polymères en résidus gênants est tellement faible que l'on peut faire l'économie du traitement d'épuration (par exemple un traitement à l'alcool), qui est obligatoire lorsque la teneur en résidus catalytiques est élevée et qui est une opération coûteuse en matières premières et en énergie et nécessitant des immobilisations considérables.

Les polyoléfines fabriquées selon l'invention se caractérisent par une morphologie remarquable. C'est le cas en particulier des polymères d'éthylène. Les polyoléfines obtenues selon l'invention peuvent être mises en oeuvre selon toutes les techniques de moulage conventionnelles : par injection, par extrusion, par extrusion-soufflage, par calandrage, etc.

Les exemples qui suivent sont destinés à illustrer l'invention.

La signification de symboles utilisés dans ces exemples, les unités exprimant les grandeurs mentionnées et les méthodes de mesure de certaines de ces grandeurs sont explicitées ci-dessous.

- S = surface spécifique, exprimée en $m^2/g$ et mesurée par la méthode B.E.T. basée sur l'adsorption d'azote.
- $V_{por}$ = volume poreux pour les rayons de pores inférieurs à $2.10^{-8}$ m, exprimé en ml/g.
- PSA = poids spécifique apparent du polymère, exprimé en $kg/m^3$ et mesuré par tassement.
- $Ø_{moy}$ = diamètre moyen des particules de polymère, exprimé en microns ($\mu m$).
- MI = indice de fluidité du polymère, exprimé en g/10 min et mesuré selon la norme ASTM-D 1238-70.
- HLMI = indice de fluidité sous forte charge du polymère, exprimé en g/10 min et mesuré selon la

norme ASTM - D 1238 - 70.

Le rapport HLMI/MI est représentatif de l'étalement de la distribution des poids moléculaires du polymère. Il est d'autant plus élevé que cette distribution est large.

$\alpha$ = activité catalytique exprimée en g de polymère/g Ti.bar$C_2H_4$.h. Cette activité est appréciée indirectement par la détermination de la teneur en titane dans le polymère par fluorescence X.

Exemple 1

1. Préparation du solide catalytique

(a) Dans un réacteur à double enveloppe de 1 litre de capacité, on introduit successivement 38 g de $MgCl_2$ (qualité anhydre de la firme BDH), 200 ml d'heptane et 278 ml de $Ti(OC_4H_9)_4$ fourni par Dynamit Nobel (le rapport atomique Ti/Mg vaut donc environ 2). Le tout est porté à la température de 90 °C et maintenu sous agitation durant 2 heures à cette température.

(b) Dans un réacteur à double enveloppe de 200 ml de capacité, on introduit 100 ml du complexe liquide obtenu en (a) ci-dessus que l'on porte à 35 °C. On introduit ensuite 10,8 ml d'un méthylhydrogénopolysiloxane (MHPS) commercialisé par DOW CHEMICAL sous la dénomination "huile 1107" (le rapport atomique Si/Ti vaut donc environ 1) et on maintient sous agitation à cette température pendant 4 heures. Le complexe solide (C) obtenu est ensuite lavé 10 fois à l'hexane. Sa surface S vaut environ 1 $m^2$/g.

(c) Au complexe solide (C) obtenu ci-dessus, on ajoute 50 ml d'hexane et 14,7 ml de $TiCl_4$ (rapport atomique Ti ajouté/Ti présent dans le complexe solide (C) = 0,8 environ). On porte la température à 50 °C et on maintient sous agitation pendant 2 heures à cette température.
Le produit obtenu est ensuite lavé 5 fois à l'hexane et séché sous courant d'azote à 60 °C.
La surface S de ce produit, non microporeux, s'élève à 11 $m^2$/g seulement.

(d) Dans un réacteur à double enveloppe de 200 ml de capacité, on introduit 2 g du produit obtenu en (c), 50 ml d'hexane puis, goutte à goutte, 7,3 ml de dichlorure d'isobutylaluminium (sous forme d'une solution à 442 g/l d'hexane (fournie par Schering)) dilués à nouveau dans 25 ml d'hexane. Le rapport atomique :

$$\frac{\text{Aluminium}}{\text{Ti total contenu dans le produit obtenu en (C)}}$$

est d'environ 5. On maintient sous agitation pendant 1 heure à 20 °C puis pendant 1 heure à 60 °C.
On lave le solide catalytique obtenu 10 fois à l'hexane et on le sèche pour effectuer les déterminations physiques et chimiques dont les résultats sont mentionnés ci-dessous.

| | |
|---|---|
| - Teneur en magnésium (g/kg) | 115 |
| - Teneur en chlore (g/kg) | 554 |
| - Teneur en titane (g/kg) | 63 |
| - Teneur en aluminium (g/kg) | 93 |
| - Teneur en silicium (g/kg) | 13 |
| - Teneur en groupes butoxy (g/kg) | 162 (estimée par différence). |

La surface S du solide catalytique est 248 $m^2$/g; 90 % de cette surface sont développés dans des pores de rayons inférieurs à $3.10^{-9}$ m. Le $V_{por}$ de ce solide vaut 0,23 ml/g; le volume poreux cumulé des pores de rayons inférieurs à $5.10^{-9}$ m est 0,15 ml/g.

2. Polymérisation

Avec le solide catalytique obtenu en 1, on réalise une suspension dans de l'hexane, la teneur en solide étant de 10 mg par ml. On introduit 0,5 ml de cette suspension et 0,5 mmole de triéthylaluminium dans un autoclave de 1,5 l contenant 0,5 l d'hexane. La température de l'autoclave est portée ensuite à 85 °C environ. On introduit de l'éthylène sous une pression partielle de 10 bars et de l'hydrogène sous une pression partielle de 4 bars.

On poursuit la polymérisation pendant 1 h sous agitation en maintenant la pression totale constante par addition continue d'éthylène. Après 1 h, on dégaze l'autoclave et on recueille 65 g de polyéthylène (PE).

Les résultats de cet essai sont rassemblés ci – après :

| | |
|---|---|
| – $\alpha$ | 16.700 |
| – MI du PE | 0,93 |
| – HLMI du PE | 29 |
| – rapport HLMI/MI | 31 |
| – $\emptyset_{moy}$ | 400 |
| – PSA | 377 |

Exemple 1R

Cet exemple est donné à titre de comparaison.

On reproduit la préparation du solide catalytique décrite en 1 dans l'exemple 1 ci – dessus, sauf que l'on omet l'étape (d).

On procède à un essai de polymérisation avec 1 ml d'une suspension de ce produit, issu de l'étape 1.(c) de l'exemple 1, dans les conditions décrites au point 2 de l'exemple 1 et on obtient 65 g de PE. Les résultats de cet essai sont rassemblés ci – après :

| | |
|---|---|
| – $\alpha$ | 11.200 |
| – MI du PE | 3,08 |
| – HLMI du PE | 84 |
| – rapport HLMI/MI | 27 |
| – $\emptyset_{moy}$ | 370 |
| – PSA | 371. |

On observe donc que le solide catalytique microporeux de l'exemple 1 conduit, avec une activité supérieure, à un polyéthylène de distribution élargie des poids moléculaires.

Exemple 2

On prépare un solide catalytique comme décrit au point 1 de l'exemple 1, sauf que, à l'étape (b), on introduit en outre 28,2 ml d'éther dibutylique (le rapport molaire éther dibutylique/Ti présent dans le complexe liquide vaut environ 1). On maintient sous agitation pendant 1 heure à 50 ° C, on ramène la température à 35 ° C, puis on poursuit la préparation par addition de MHPS comme indiqué en 1.(b) dans l'exemple 1.

Le solide catalytique obtenu se caractérise comme suit :

- S = 281 $m^2/g$; 94,3 % de cette surface sont développés dans des pores de rayons inférieurs à $5.10^{-9}$ m;
- $V_{por}$ = 0,32 ml/g; le volume poreux cumulé des pores de rayons inférieurs à $5.10^{-9}$ m est 0,20 ml/g.

Il contient, en g/kg :

| | |
|---|---|
| – Mg | 125 |
| – Cl | 600 |
| – Ti | 112 |
| – Al | 28 |
| – Si | 10 |
| – groupes butoxy | 125 (estimé par différence). |

On procède à un essai de polymérisation comme décrit au point 2 de l'exemple 1 et on obtient 71 g de PE.

Les résultats particuliers à cet essai sont rassemblés ci – après :

| | |
|---|---|
| – α | 14.600 |
| – MI du PE | 0,62 |
| – HLMI du PE | 23,2 |
| – rapport HLMI/MI | 38 |
| – $Ø_{moy}$ | 390 |
| – PSA | 362. |

Exemple 3

On prépare un solide catalytique selon la description donnée à l'exemple 2, sauf que l'on utilise du triéthylaluminium (3 ml dilués dans 10 ml d'hexane) à la place du dichlorure d'isobutylaluminium.

Un essai de polymérisation a été effectué avec ce solide dans les conditions générales mentionnées au point 2 de l'exemple 1, avec introduction du solide catalytique dans l'autoclave, par un sas à deux vannes (éthylène et azote), comme schématisé ci-après :

- fermeture de la vanne d'éthylène;
- balayage du sas par de l'azote;
- introduction du solide catalytique et de 5 ml d'hexane dans le sas;
- fermeture de la vanne d'azote;
- introduction, dans le sas, d'azote sous haute pression (50 bars);
- injection du solide par ouverture du sas vers l'autoclave préalablement porté et maintenu à 85 °C.

Les résultats de cet essai de polymérisation, qui a permis d'obtenir 87 g de PE, sont mentionnés ci-après :

| | |
|---|---|
| – α | 18.100 |
| – MI du PE | 2,28 |
| – HLMI du PE | 45,8 |
| – rapport HLMI/MI | 20 |
| – Ømoy | 210 |
| – PSA | 303. |

Ce solide catalytique permet donc d'obtenir, avec une activité très élevée, un polyéthylène de distribution étroite des poids moléculaires.

En outre, on observe une élévation immédiate de la température de l'autoclave de 3 °C, dès le début de la polymérisation, ce qui démontre l'absence de période d'induction. Une analyse par chromatographie en phase vapeur de l'hexane de polymérisation y révèle l'existence de 87 ppm en volume de n-butène seulement.

Exemple 2R

Cet exemple est donné à titre de comparaison.

On prépare un solide catalytique comme indiqué à l'exemple 3, sauf que l'on omet le traitement au triéthylaluminium; on utilise 0,5 ml d'une suspension dans l'hexane de ce solide pour effectuer un essai de polymérisation selon les conditions de l'exemple 3. On obtient 54 g de PE.

Les résultats particuliers de cet essai sont consignés ci-après :

| | |
|---|---|
| – α | 11.500 |
| – MI du PE | 1,46 |
| – HLMI du PE | 34,2 |
| – rapport HLMI/MI | 23 |
| – $Ø_{moy}$ | 190 |
| – PSA | 327. |

On observe une élévation de la température de l'autoclave de 1 °C seulement après 4 minutes, ce qui démontre l'existence d'une période d'induction. Une analyse par chromatographie en phase vapeur de

l'hexane de polymérisation y révèle l'existence de 1092 ppm de n-butène.

Exemple 4

On prépare un solide catalytique selon le mode opératoire décrit au point 1 de l'exemple 1, sauf que l'on prépare le complexe liquide de l'étape (a) en présence d'une quantité supplémentaire d'éther dibutylique telle que le rapport molaire éther dibutylique/Ti présent dans le milieu de préparation du complexe vaut environ 1.

On procède, en présence de 0,7 ml d'une suspension dans l'hexane du solide catalytique ainsi obtenu, à un essai de polymérisation effectué comme décrit à l'exemple 3, pour obtenir 75 g de PE.

Les résultats particuliers de cet essai sont consignés ci-après :

| | |
|---|---|
| - $\alpha$ | 26.300 |
| - MI du PE | 0,73 |
| - HLMI du PE | 22,8 |
| - rapport HLMI/MI | 31 |
| - $\varnothing_{moy}$ | 190 |
| - PSA | 310. |

On observe une élévation immédiate de la température de l'autoclave de 7 °C, dès le début de la polymérisation, ce qui démontre l'absence totale de période d'induction.

Exemple 5

On prépare un solide catalytique selon la description donnée à l'exemple 1, sauf que l'on prépare le complexe liquide de l'étape (a) en présence d'une quantité de butanol telle que le rapport molaire butanol/Ti présent dans le milieu de préparation du complexe vaut environ 0,1 et que l'on utilise du triéthylaluminium à la place de dichlorure d'isobutylaluminium (comme dans l'exemple 3).

Le solide catalytique obtenu contient 102 g/kg de magnésium, 386 g/kg de chlore, 90 g/kg de titane, 62 g/kg d'aluminium et 2,5 g/kg de silicium.

Sa S est 405 $m^2/g$; 96 % de cette surface sont développés dans des pores de rayons inférieurs à $5.10^{-9}$ m et 93 % dans des pores de rayons inférieurs à 30 Å. Le $V_{por}$ de ce solide vaut 0,27 ml/g; le volume poreux cumulé des pores de rayons inférieurs à $5.10^{-9}$ m est 0,18 ml/g.

On procède, en présence de 0,3 ml d'une suspension dans l'hexane du solide catalytique ainsi obtenu, à un essai de polymérisation comme décrit au point 2 de l'exemple 1 et on obtient 94 g de PE. Les résultats de cet essai sont rassemblés ci-après :

| | |
|---|---|
| - $\alpha$ | 25.000 |
| - MI du PE | 3,12 |
| - HLMI du PE | 84,5 |
| - rapport HLMI/MI | 27 |
| - $\varnothing_{moy}$ | 480 |
| - PSA | 303. |

## Revendications

1. Solide catalytique, utilisable pour la polymérisation des alpha-oléfines, contenant du magnésium, un halogène, du titane et du silicium, caractérisé en ce qu'il contient de l'aluminium et en ce qu'une fraction d'au moins 50 % de sa porosité BET (norme britannique BS 4359/1) est développée dans des pores de rayons inférieur à $5.10^{-9}$ m (50Å).

2. Solide catalytique selon la revendication 1, caractérisé en ce que plus de 60 % de sa surface spécifique sont développés dans des pores de rayon inférieur à $5.10^{-9}$ m (50 Å).

**3.** Solide catalytique selon la revendication 1, caractérisé en ce qu'une fraction d'au moins 50 % de sa porosité, pour les rayons de pores inférieurs à $2.10^{-8}$m (200 Å), est développée dans des pores de rayon inférieur à $3.10^{-9}$m (30 Å).

**4.** Procédé pour la préparation de solides catalytiques, selon la revendication 1, selon lequel :
- on transforme un halogénure de magnésium (M) en un complexe solide (C) contenant du magnésium, un halogène, du titane et du silicum par addition d'un agent de précipitation du complexe (C) choisi parmi les composés polymériques (S) du silicium, à un milieu liquide contenant une solution homogène résultant du contact d'un composé oxygéné organique (T) du titane, optionnellement additionné d'un composé électrodonneur (ED), avec l'halogénure (M);
- on transforme le complexe solide (C) en solide catalytique par mise en contact dudit complexe solide avec un composé (H) choisi parmi les composés halogénés du titane et du silicium

caractérisé en ce que le complexe solide (C) est transformé en solide catalytique dont une fraction d'au moins 50 % de la porosité BET est développée dans des pores de rayon inférieur à $5.10^{-9}$m (50 Å), par mise en contact dudit complexe solide avec un composé organoaluminique supplémentaire (A).

**5.** Procédé selon la revendication 4, caractérisé en ce que l'halogénure de magnésium (M) est un dihalogénure.

**6.** Procédé selon la revendication 4, caractérisé en ce que le composé oxygéné organique (T) est choisi parmi les alkoxydes et les esters d'acides polytitaniques.

**7.** Procédé selon la revendication 6, caractérisé en ce que le composé oxygéné organique (T) est choisi parmi les tétra-alkoxydes du titane.

**8.** Procédé selon la revendication 4, caractérisé en ce que la structure du composé polymérique (S) est représentée par la formule générale :

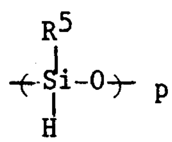

dans laquelle $R^5$ représente un radical hydrocarboné contenant de 1 à 20 atomes de carbone et p est le degré moyen de polymérisation.

**9.** Procédé selon la revendication 4, caractérisé en ce que l'éventuel composé électrodonneur (ED) est un éther aliphatique contenant de 2 à 6 atomes de carbone.

**10.** Procédé selon la revendication 4, caractérisé en ce que le composé (H) est choisi parmi les tétrahalogénures de titane et de silicium.

**11.** Procédé selon la revendication 4, caractérisé en ce que la structure du composé organoaluminique (A) répond à la formule générale :

$$AlR^6_nX_{3-n}$$

dans laquelle $R^6$ représente un radical hydrocarboné contenant de 1 à 20 atomes de carbone, X représente un halogène et n est un nombre tel que $0 < n \leq 3$.

**12.** Procédé selon la revendication 11, caractérisé en ce que le composé organoaluminique (A) est un trialkylaluminium.

**13.** Procédé selon la revendication 11, caractérisé en ce que le composé organoaluminique (A) est un dichlorure d'alkylaluminium.

**14.** Procédé pour la polymérisation des alpha-oléfines effectué en présence d'un système catalytique comprenant un composé organométallique d'un métal des groupes Ia, IIa, IIb, IIIb et IVb du Tableau Périodique et un solide catalytique selon la revendication 1.

**15.** Procédé pour la polymérisation des alpha-oléfines effectué en présence d'un système catalytique comprenant un composé organométallique d'un métal des groupes Ia, IIa, IIb, IIIb et IVb du Tableau Périodique et un solide catalytique préparé selon la revendication 4.

## Claims

**1.** Catalytic solid for use in the polymerisation of alpha-olefins, containing magnesium, a halogen, titanium and silicon, characterised in that it contains aluminium and in that a fraction comprising at least 50 % of its BET porosity (British Standard BS 4359/1) is developed in pores of radii less than 5 x $10^{-9}$ m (50 Å).

**2.** Catalytic solid according to Claim 1, characterised in that more than 60 % of its specific surface area is developed in pores of radius less than 5 x $10^{-9}$ m (50 Å).

**3.** Catalytic solid according to Claim 1, characterised in that a fraction comprising at least 50 % of its porosity, for pore radius less than 2 x $10^{-8}$ m (200 Å), is developed in pores of radii less than 3 x $10^{-9}$ m (50 Å).

**4.** Process for the preparation of catalytic solids according to Claim 1, according to which:

- a magnesium halide (M) is converted to a solid complex (C) containing magnesium, a halogen, titanium, and silicon by addition of an agent for precipitation of the complex (C) chosen from polymeric compounds (S) of silicon, to a liquid medium containing a homogeneous solution resulting from the contact of an organic oxygen compound (T) of titanium, optionally containing an added electron-donor compound (ED), with the halide (M);
- the solid complex (C) is converted to a catalytic solid by bringing the said solid complex into contact with a compound (H) selected among the halogenated compounds of titanium and silicon

characterised in that the solid complex (C) is converted to a catalytic solid in which a fraction of at least 50 % of the BET porosity is developed in pores of radius less than 5 x $10^{-9}$ m (50 Å), by bringing the said solid complex into contact with a supplementary organoaluminium compound (A).

**5.** Process according to Claim 4, characterised in that the magnesium halide (M) is a dihalide.

**6.** Process according to Claim 4, characterised in that the organic oxygen compound (T) is selected among the alkoxides and esters of polytitanic acids.

**7.** Process according to Claim 6, characterised in that the organic oxygen compound (T) is selected among the titanium tetraalkoxides.

**8.** Process according to Claim 4, characterised in that the structure of the polymeric compound (S) is represented by the general formula:

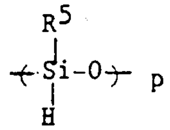

in which $R^5$ represents a hydrocarbon radical containing 1 to 20 carbon atoms and p is the average degree of polymerisation.

**9.** Process according to Claim 4, characterised in that the optional electron donor compound (ED) is an aliphatic ether containing 2 to 6 carbon atoms.

**10.** Process according to Claim 4, characterised in that the compound (H) is selected among the titanium and silicon tetrahalides.

**11.** Process according to Claim 4, characterised in that the structure of the organoaluminium compound (A) corresponds to the general formula:

$$AlR^6_nX_{3-n}$$

in which $R^6$ represents a hydrocarbon radical containing 1 to 20 carbon atoms, X represents a halogen and n is a number such that $0 < n \leq 3$.

**12.** Process according to Claim 11, characterised in that the organoaluminium compound (A) is a trialkylaluminium.

**13.** Process according to Claim 11, characterised in that the organoaluminium compound (A) is an alkylaluminium dichloride.

**14.** Process for the polymerization of alpha-olefins carried out in the presence of a catalyst system containing an organometallic compound of a metal of Groups Ia, IIa, IIb, IIIb and IVb of the Periodic Table and a catalytic solid according to Claim 1.

**15.** Process for the polymerisation of alpha-olefins carried out in the presence of a catalyst system containing an organometallic compound of a metal of Groups Ia, IIa, IIb, IIIb and IVb of the Periodic Table and a catalytic solid prepared according to Claim 4.

**Patentansprüche**

**1.** Katalytische Festsubstanz, die für die Polymerisation von alpha-Olefinen verwendet werden kann, enthaltend Magnesium, ein Halogen, Titan und Silizium, dadurch gekennzeichnet, daß sie Aluminium enthält und, daß ein Teil von wenigstens 50 % ihrer Porosität BET (britische Norm BS 4359/1) in Poren mit einem Radius kleiner als $5.10^{-9}$ m (50 Å) gebildet ist.

**2.** Katalytische Festsubstanz nach Anspruch 1, dadurch gekennzeichnet, daß mehr als 60 % ihrer spezifischen Oberfläche in Poren mit einem Radius kleiner als $5.10^{-9}$ m (50 Å) gebildet sind.

**3.** Katalytische Festsubstanz nach Anspruch 1, dadurch gekennzeichnet, daß ein Teil von wenigstens 50 % ihrer Porosität, für Radien von Poren kleiner als $2.10^{-8}$ m (200 Å), in Poren mit einem Radius kleiner als $3.10^{-9}$ m (30 Å) gebildet ist.

**4.** Verfahren zur Herstellung von katalytischen Festsubstanzen nach Anspruch 1, gemäß dem man
- ein Magnesiumhalogenid (M) in einen festen Komplex (C) umwandelt, der Magnesium, ein Halogen, Titan und Silizium enthält, durch Zufügen eines Ausfällungsmittels des Komplexes (C), ausgewählt unter den polymeren Verbindungen (S) des Siliziums, zu einem flüssigen Medium, das eine homogene Lösung enthält, die aus dem Kontakt einer organischen, sauerstoffhaltigen Verbindung (T) des Titans, dem gegebenenfalls eine elektronenspendende Verbindung (ED) zugefügt wurde, mit dem Halogenid (M) stammt;
- den festen Komplex (C) in eine katalytische Festsubstanz umwandelt durch in-Kontakt-Bringen des festen Komplexes mit einer Verbindung (H), ausgewählt unter den halogenierten Verbindungen des Titans und des Siliziums,

dadurch gekennzeichnet, daß der feste Komplex (C) in eine katalytische Festsubstanz umgewandelt wird, wobei ein Teil von wenigstens 50 % der Porosität BET in Poren mit einem Radius kleiner als $5.10^{-9}$ m (50 Å) gebildet wird, durch In-Kontakt-Bringen des festen Komplexes mit einer zusätzlichen Organoaluminium-Verbindung (A).

**5.** Verfahren nach Anspruch 4, dadurch gekennzeichnet, daß das Magnesiumhalogenid (M) ein Dihalogenid ist.

**6.** Verfahren nach Anspruch 4, dadurch gekennzeichnet, daß die organische, sauerstoffhaltige Verbindung (T) ausgewählt ist unter den Alkoxyden und Estern von Polytitansäuren.

**7.** Verfahren nach Anspruch 6, dadurch gekennzeichnet, daß die organische, sauerstoffhaltige Verbindung (T) ausgewählt ist unter den Tetraalkoxyden des Titans.

**8.** Verfahren nach Anspruch 4, dadurch gekennzeichnet, daß die Struktur der polymeren Verbindung (S) dargestellt wird durch die allgemeine Formel:

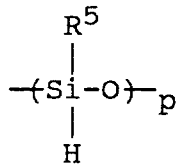

in der $R^5$ einen Kohlenwasserstoffrest darstellt, der 1 bis 20 Kohlenstoffatome enthält und p der mittlere Polymerisationsgrad ist.

**9.** Verfahren nach Anspruch 4, dadurch gekennzeichnet, daß die mögliche elektronenspendende Verbindung (ED) ein aliphatischer Ether ist, der 2 bis 6 Kohlenstoffatome enthält.

**10.** Verfahren nach Anspruch 4, dadurch gekennzeichnet, daß die Verbindung (H) ausgewählt ist unter den Tetrahalogeniden von Titan und Silizium.

**11.** Verfahren nach Anspruch 4, dadurch gekennzeichnet, daß die Struktur der Organoaluminium-Verbindung (A) der allgemeinen Formel:

$$AlR_n^6X_{3-n}$$

entspricht, in der $R^6$ einen Kohlenwasserstoffrest darstellt, der 1 bis 20 Kohlenstoffatome enthält, X ein Halogenid darstellt und n eine Zahl wie $0 < n \leqq 3$ ist.

**12.** Verfahren nach Anspruch 11, dadurch gekennzeichnet, daß die Organoaluminium-Verbindung (A) ein Trialkylaluminium ist.

**13.** Verfahren nach Anspruch 11, dadurch gekennzeichnet, daß die Organoaluminium-Verbindung (A) ein Alkylaluminium-Dichlorid ist.

**14.** Verfahren zur Polymerisation von alpha-Olefinen, das in Anwesenheit eines katalytischen Systems durchgeführt wird, umfassend eine organometallische Verbindung eines Metalls der Gruppen Ia, IIa, IIb, IIIb und IVb der Tabelle des Periodischen Systems und eine katalytische Festsubstanz nach Anspruch 1.

**15.** Verfahren zur Polymerisation von alpha-Olefinen, das in Anwesenheit eines katalytischen Systems durchgeführt wird, umfassend eine organometallische Verbindung eines Metalls der Gruppen Ia, IIa, IIb, IIIb und IVb der Tabelle des Periodischen Systems und eine katalytische Festsubstanz hergestellt nach Anspruch 4.